# EUROPÄISCHE PATENTANMELDUNG

(11) **EP 1 909 091 A2**
(43) Veröffentlichungstag der Anmeldung: **09.04.2008**
(21) Anmeldenummer: 07117768.7
(22) Anmeldetag: 02.10.2007
(51) Int. Cl.: G01N 1/22, G01N 15/02, G01N 1/28, G01N 15/06

(54) **Prüfanordnung für die Untersuchung der Staubabscheidung in Luft bzw. Abgasen**

(30) Priorität: 02.10.2006 AT 16372006
(71) Anmelder: M-U-T MASCHINEN-UMWELTTECHNIK- TRANSPORTANLAGEN GESELLSCHAFT M.B.H., A-2000 Stockerau (AT)
(72) Erfinder: Hahnl, Josef, MBA, Ing., 4470 Enns (AT)
(74) Vertreter: Müllner, Martin

(57) **Zusammenfassung**

Eine Prüfanordnung für die Untersuchung der Staubabscheidung in Luft umfasst einen Staubgenerator (1) einerseits und eine Absaugleitung (19) mit einem Sauggebläse (2) anderseits. Umgebungsluft wird in ein Mischrohr einer Mischstrecke (4) eingesaugt und dabei Staub dosiert aus dem Staubgenerator (1) eingebaut. In einer nachfolgenden Konditioniereinrichtung (9) sind von außen bezüglich Tröpfchengröße, Richtung und Sprühwinkel einstellbare Düsen (10) zur Benetzung und bzw. oder Elektroden (11) zur elektrostatischen Aufladung des Staubes vorgesehen. Dann folgt eine weitere Mischstrecke (13) und ein Abscheider (14) mit einer Prallfläche (15) und einem Gitter (16) als Filter auf Massepotential, dem allenfalls ein weiteres Gitter (17), das negativ geladen ist, folgt. Die Absaugleitung (19) schließt oben am Gehäuse des Abscheiders (14) an. Der Abscheider (14) verfügt über einen Behälter (20) zum Sammeln des Staubes. Zumindest in den Mischrohren sind Messstellen für Strömung und Staubmenge vorgesehen.

## Beschreibung

### Technisches Gebiet

Die Erfindung betrifft eine Prüfanordnung für die Untersuchung der Staubabscheidung in Luft bzw. Abgasen mit einem Staubgenerator und einer Absaugleitung zu einem Sauggebläse.

### Stand der Technik

Kehrmaschinen, z.B. zur Straßenreinigung, sind mit Staubabscheidern ausgerüstet, die so wie bei Staubsaugern verhindern sollen, dass staubbeladene Luft oder Gase durch das Abluftrohr des Sauggebläses wieder ins Freie gelangen. Um solche Kehrmaschinen zu optimieren, hat man bisher einen Prototyp gebaut und im praktischen Betrieb durch Veränderung der Einbauten im Abscheider, wie etwa der Anstellwinkel von Prallflächen oder der Düsenparameter bei Benetzung des Staubes, versucht, eine Optimierung des Wirkungsgrades herbeizuführen. Ein besonderes Problem stellt der Feinstaub dar, denn Partikel unter 10 µm sind einerseits mit herkömmlichen Methoden schwer zu erfassen und sind auf der Abluftseite eines Staubabscheiders wohl messbar, aber nicht sichtbar. Gerade der Feinstaub ist für die Umwelt und insbesondere die Gesundheit des Menschen äußerst schädlich. Dies wurde international erkannt und in Luftreinhaltegesetzen sind Grenzwerte definiert, die bisher nur schwer zu erreichen oder zu unterschreiten waren. Eine Staubbelastung einschließlich des gefürchteten Feinstaubes ergibt sich in den mit Straßenstaub belasteten Abgasen etwa von Straßentunneln. Auch entsprechende Anlagen zur Reinigung der Abluft (der mit Staub beladenen Abgase) eines Tunnels erfordern eine Optimierung.

Aus der US 3081623 ist es bekannt, das Sprühbild von Düsen zu analysieren bzw. entsprechend der JP 5126842 Asichtbar zu machen. Auch die DE 19640910 Abeschäftigt sich mit der Sichtbarmachung von Strömungsvorgängen innerhalb eines Strömungskanals.

### Darstellung der Erfindung

Die Erfindung zielt darauf ab, unabhängig von einer Kehrmaschine oder einer Anlage zur Staubabscheidung eine Prüfanordnung für die Untersuchung der Staubabscheidung zu schaffen, mit dem Ziel, die entsprechenden Einrichtungen zur Staubabscheidung von Anfang an optimal auszubilden und insbesondere auch den Feinstaub vollständig zu erfassen. Es ist klar, dass die Parameter der Einrichtungen bei Betrieb einer Kehrmaschine oder eines Abscheiders in einer Großstadt, am Land, oder auf Flughäfen bzw. bei staubbeladenen Abgasen eines Tunnels völlig unterschiedlich sind.

Eine solche Prüfanordnung ist dadurch gekennzeichnet, dass im Anschluss an den Staubgenerator eine Einlauf- und erste Mischstrecke für den dosierbaren Staub mit Umgebungsluft bzw. Abgasen vorgesehen ist, die verschließbare Messöffnungen für Strömung und Staubgehalt aufweist; dass anschließend daran über eine Trennstelle, insbesondere mit Flanschen, eine Konditioniereinrichtung für die Staubpartikel in der staubbeladenen Luft bzw. in den Abgasen nachgeschaltet ist, die Düsen unterschiedlicher oder einstellbarer Tröpfchengröße, Sprührichtung, Sprühwinkel und gegebenenfalls -kegel für Flüssigkeiten und bzw. oder Elektroden, z.B. Sprühelektroden, aufweist; dass danach eine zweite Mischstrecke mit Messöffnungen angeschlossen ist, die einen austauschbaren Abscheider oder ein Abscheidesystem mit gegenüber der Konditioniereinrichtung vergrößertem Volumen zur Strömungsverringerung und mit Öffnungen zur Messung der Strömung und Staubkonzentration beaufschlagt; und dass anschließend daran die Absaugleitung mit dem Sauggebläse einschließlich einer Beruhigungsstrecke, jeweils mit Messöffnungen, folgt.

Die Konditioniereinrichtung bindet und bzw. oder ladet die Staubpartikel, auch jene, die dem Feinstaub zuzurechnen sind. Dazu sind die Düsen hinsichtlich der genannten Parameter so auszuwählen und einzustellen, dass sich eine Optimierung des Wirkungsgrades ergibt. Der konditionierte Staub gelangt bei reduzierter Strömungsgeschwindigkeit infolge des vergrößerten Volumens des nachfolgenden Abscheiders in dessen Sammelbehälter. Düsen und Düsenparameter und die elektrische Aufladung sowie die Einbauten zum Ausfiltern des Staubes, auch etwa Prallbleche, lassen sich einstellen und von außen verändern und können beobachtet werden, um einen auch den Feinstaub einschließenden Summeneffekt des Zusammenwirkens einer Vielzahl von aufeinander abstimmbaren Maßnahmen zu erreichen. Die Prüfanordnung ermöglicht, unterschiedliche Betriebszustände zu simulieren, indem die Mischungsverhältnisse zwischen unterschiedlichem Staub und der Umgebungsluft bzw. der Abgase z.B. durch Öffnen von Ventilen bzw. Klappen am Einlauf der Mischstrecke oder durch Variation der Staubdosierung verändert werden.

Für ein aussagekräftiges Ergebnis ist es zweckmäßig, wenn der Staubgenerator für die dosierbare Abgabe einer über mehrere Stunden gleich bleibenden Staubluftmenge mit Schwankungen vorzugsweise unter 5% ausgelegt ist. Es können dann unterschiedliche Einbauten, Anordnungen oder Düseneinstellungen unter gleichen Bedingungen objektiv verglichen werden.

Um eine wirksame Einbindung der Umgebungsluft oder zugeführter Abgase eines Benzin- oder Dieselmotors als Zuluft zu erreichen, ist die erste Mischstrecke als Rohrstück ausgebildet, dessen Länge mindestens dem fünffachen Rohrdurchmesser entspricht.

Um eine Variation der Beaufschlagung und Behandlung des Staubes zu ermöglichen, ist die Konditioniereinrichtung als Behälter oder Rohrstück mit gegebenenfalls von außen beweglichen Haltern zur Änderung der Einbaulagen und der Düsenparameter, wie Tröpfchengröße, Sprühwinkel, Sprührichtung und Sprühkegel, ausgebildet.

Ferner ist es zweckmäßig, wenn die Düsen elektrisch isoliert und mit elektrischen Anschlüssen zur Aufladung der von den Düsen gebildeten Tröpfchen ausgebildet sind.

Ergänzend oder an Stelle der Tröpfchenaufladung kann vorgesehen sein, dass die Konditioniereinrichtung Öffnungen zur elektrischen Anspeisung von Elektroden im Bereich von 5 bis 40 kV für das lonisieren bzw. Aufladen der staubbeladenen Luft bzw. Abgase aufweist.

Schließlich kann eine visuelle Überprüfung der Staubabscheidung dadurch erfolgen, dass die Gehäuse der Konditioniereinrichtung und des Abscheiders Durchsichtbereiche, insbesondere Fenster zur Überprüfung bzw. Kontrolle des Wirkungsgrades der Einbauten aufweisen.

Ferner ist es zweckmäßig, wenn der Abscheider als Behälter ausgebildet ist und im Einlaufbereich eine Prallfläche zur Orientierung der eingesaugten konditionierten Staubpartikel zum Boden des Behälters hin und im oberen Bereich vor der Absaugöffnung mindestens ein Gitter als Filter bzw. als Gitterelektrode auf Massepotential, allenfalls mit nachgeordnetem Gitter mit einer einstellbaren Spannung zwischen -5 bis -40 kV, vorgesehen sind.

In jeder Stadt, jedem Ort oder auch in jedem Unternehmen, welches über eine Kehrmaschine verfügt, oder aber auch bei Tunnelabscheidern fällt Staub in typischer Weise an. Daher ist es zweckmäßig, dem Einsatzort entsprechend angepasste Kehrmaschinen bzw. Abscheider zu liefern. Diese Einstellung, Anpassung oder Sonderkonstruktion eines speziellen Abscheidesystems kann mit der Prüfanordnung simuliert werden. Die Serienfertigung ist dann ohne Herstellung eines Prototyps möglich.

### Kurze Beschreibung der Abbildungen der Zeichnungen

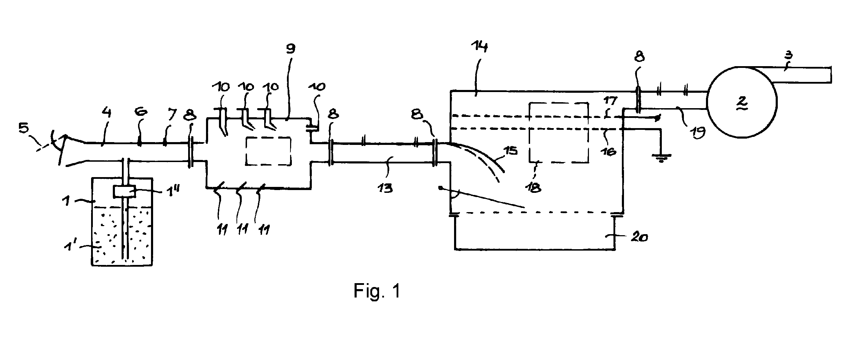

Ein Ausführungsbeispiel der erfindungsgemäßen Prüfanordnung ist in der Zeichnung schematisch dargestellt.

### Bester Weg zur Ausführung der Erfindung

Eine Prüfeinrichtung für die Untersuchung der Staubabscheidung in Luft (oder einem Gas) umfasst einen Staubgenerator 1, der aus einem Vorratsbehälter 1' mittels einer Dosiereinrichtung 1" eine konstante Staubmenge in einen Luftstrom (z.B. Abgasstrom) einbringt. Der Luftstrom wird von einem Sauggebläse 2 erzeugt, dessen Austrittsstutzen als Beruhigungsstrecke 3 ins Freie mündet. Dort darf kein Staub mehr austreten.

Die Einbringung der Staubmenge in den Luftstrom mit einer Staubqualität, die Feinstaub einschließt, erfolgt in einer Mischstrecke 4, die als Rohrstück ausgebildet ist. Die Länge desselben entspricht mindestens dem fünffachen Rohrdurchmesser. Die angesaugte Luftmenge kann über Ventile oder Klappen (z.B. Klappe 5) eingestellt werden. Durch entsprechende Motoren können auch Abgase angesaugt werden. Messöffnungen 6, 7 für Messstellen von Strömung und Staubgehalt, z.B. Feinstaubgehalt, sind vorgesehen. Die Mischstrecke 4 in Form des Mischrohres hat den Zweck, das Staub-Luftgemisch zu homogenisieren. Die nachfolgenden Bauteile sind durch lösbare Anschlussstücke wie Flansche 8 allenfalls mit Schnellkupplungen austauschbar. So folgt der Mischstrecke 4 eine Konditioniereinrichtung 9 in einem Gehäuse oder allenfalls Rohrstück, in welchem Düsen 10 zum Einsprühen von Wasser und bzw. oder Elektroden 11 zur Aufladung vorgesehen sind. Die Düsen 10 sind auf Haltern angeordnet und können von außen hinsichtlich Sprühcharakteristik (Tröpfchengröße, Sprührichtung, Winkel, Fächer, Kegel) verändert oder auch ausgetauscht oder als unterschiedliche Register zugeschaltet werden. Die Düsen 10 können selbst elektrisch geladen sein, oder es können separate Elektroden 11, z.B. Sprühelektroden, zur Anwendung kommen. Die Spannung beträgt vorzugsweise 5 bis 40 kV und ist regelbar. Die Konditionierung bedeutet eine Beladung der Staubpartikel mit Wasser oder einer Flüssigkeit, allenfalls mit Netzmittel, und die eventuelle elektrostatische Aufladung zwecks Ausfilterung. Der konditionierte Staub im Staub-Luftgemisch gelangt in eine angeflanschte Mischstrecke 13, wieder mit Messpositionen wie bei der Mischstrecke 4.

Dann folgt der Abscheider 14. Eine lageveränderbare Prallfläche 15 lenkt das Staub-Luft- oder -Abgasgemisch zu Boden. Das Volumen des Behälters für den Abscheider 14 ist wesentlich größer als jenes des Behälters oder Rohres der Konditioniereinrichtung. Hier erfolgt die Trennung zwischen aufsteigendem beladenem Staub und Luft durch Schwerkraft und durch ein Gitter 16, das als Filter wirkt. Dieses kann auf Massepotential liegen, damit die geladenen Staubpartikel dort anhaften, wenn die elektrostatische Aufladung in der Konditioniereinrichtung (9) aktiviert wurde. Es kann ein negativ geladenes Gitter 17 (-5 bis -40 kV) dahinter liegen, das die geladenen Staubpartikel zum Massegitter hin beschleunigt. Die Spannungen sind einstellbar. Fenster sind als Durchsichtsbereiche 18 vorgesehen, ebenso Messöffnungen, sodass man die Auswirkungen von Veränderungen im Anstellwinkel der Prallfläche 15 oder der Spannung beobachten kann. Im oberen Bereich des Abscheiders setzt die Absaugleitung 19 an, die mit Messgeräten (z.B. Staubgehalt) ausgestattet ist. Das Sauggebläse 2 ist angeschlossen. Der Staub wird als Aufschlämmung in einem Behälter 20 gesammelt. Die Messstellen in der Absaugleitung, insbesondere hinsichtlich des Feinstaubes, der nach dem genormten Feinstaubmessverfahren gemessen wird, zeigen an, ob die in der Prüfanordnung getesteten Maßnahmen einen positiven Summeneffekt ergeben und lassen erkennen, wenn ein Optimum der Wirkung erreicht ist.

## Patentansprüche

1. Prüfanordnung für die Untersuchung der Staubabscheidung in Luft bzw. Abgasen mit einem Staubgenerator (1) und einer Absaugleitung (19) zu einem Sauggebläse (2), **dadurch gekennzeichnet, dass** im Anschluss an den Staubgenerator (1) eine Einlauf- und erste Mischstrecke (4) für den dosierbaren Staub mit Umgebungsluft bzw. Abgasen vorgesehen ist, die verschließbare Messöffnungen (6, 7) für Strömung und Staubgehalt aufweist; dass anschließend daran über eine Trennstelle, insbesondere mit Flanschen (8), eine Konditioniereinrichtung (9) für die Staubpartikel in der staubbeladenen Luft bzw. in den Abgasen nachgeschaltet ist, die Düsen (10) unterschiedlicher oder einstellbarer Tröpfchengröße, Sprührichtung, Sprühwinkel und gegebenenfalls -kegel für Flüssigkeiten und bzw. oder Elektroden (11), z.B. Sprühelektroden, aufweist;
dass danach eine zweite Mischstrecke (13) mit Messöffnungen angeschlossen ist, die einen austauschbaren Abscheider (14) oder ein Abscheidesystem mit gegenüber der Konditioniereinrichtung (9) vergrößertem Volumen zur Strömungsverringerung und mit Öffnungen zur Messung der Strömung und Staubkonzentration beaufschlagt;
und dass anschließend daran die Absaugleitung (19) mit dem Sauggebläse (2) einschließlich einer Beruhigungsstrecke (3), jeweils mit Messöffnungen, folgt.

2. Prüfanordnung nach Anspruch 1, **dadurch gekennzeichnet, dass** der Staubgenerator (1) für die dosierbare Abgabe einer über mehrere Stunden gleich bleibenden Staubluftmenge mit Schwankungen vorzugsweise unter 5% ausgelegt ist.

3. Prüfanordnung nach Anspruch 1 oder 2, **dadurch gekennzeichnet, dass** die erste Mischstrecke (4) als Rohrstück ausgebildet ist, dessen Länge mindestens dem fünffachen Rohrdurchmesser entspricht.

4. Prüfanordnung nach einem der Ansprüche 1 bis 3, **dadurch gekennzeichnet, dass** die Konditioniereinrichtung (9) als Behälter oder Rohrstück mit Düsen (10) mit gegebenenfalls von außen beweglichen Haltern zur Änderung der Einbaulagen und der Düsenparameter, wie Tröpfchengröße, Sprühwinkel, Sprührichtung und Sprühkegel, ausgebildet ist.

5. Prüfanordnung nach einem der Ansprüche 1 bis 4, **dadurch gekennzeichnet, dass** die Düsen (10) elektrisch isoliert und mit elektrischen Anschlüssen zur Aufladung der von den Düsen (10) gebildeten Tröpfchen ausgebildet sind.

6. Prüfanordnung nach einem der Ansprüche 1 bis 5, **dadurch gekennzeichnet, dass** die Konditioniereinrichtung (9) Öffnungen zur elektrischen Anspeisung von Elektroden (11) im Bereich von 5 bis 40 kV für das lonisieren bzw. Aufladen der staubbeladenen Luft bzw. Abgase aufweist.

7. Prüfanordnung nach einem der Ansprüche 1 bis 6, **dadurch gekennzeichnet, dass** die Gehäuse der Konditioniereinrichtung (9) und des Abscheiders (14) Durchsichtbereiche (18), insbesondere Fenster, zur Überprüfung bzw. Kontrolle des Wirkungsgrades der Einbauten aufweisen.

8. Prüfanordnung nach einem der Ansprüche 1 bis 7, **dadurch gekennzeichnet, dass** der Abscheider (14) als Behälter ausgebildet ist und im Einlaufbereich eine Prallfläche (15) zur Orientierung der eingesaugten konditionierten Staubpartikel zum Boden des Behälters hin und im oberen Bereich vor der Absaugöffnung mindestens ein Gitter (16) als Filter bzw. als Gitterelektrode auf Massepotential, allenfalls mit nachgeordnetem Gitter (17) mit einer einstellbaren Spannung zwischen -5 bis -40 kV, vorgesehen sind.
